# EUROPEAN PATENT SPECIFICATION

(11) **EP 0 729 590 B1**
(45) Date of publication and mention of the grant of the patent: **25.02.1998**
(21) Application number: 94914506.4
(22) Date of filing: 11.05.1994
(51) Int. Cl.: G01V 3/02, G01V 3/08

(54) **METHOD AND APPARATUS FOR MEASURING GEOPHYSICAL DATA**
VERFAHREN UND GERAET ZUM MESSEN VON GEOPHYSIKALISCHEN DATEN
PROCEDE ET APPAREIL DE MESURE DE DONNEES GEOPHYSIQUES

(30) Priority: 03.06.1993 GB 9311492; 29.10.1993 GB 9322262
(43) Date of publication of application: 04.09.1996
(73) Proprietor: TEXPLOR EXPLORATION & ENVIRONMENTAL TECHNOLOGY GMBH, 14772 Brandenburg (DE)
(72) Inventor: SCOTT, Roy, Surrey SM6 8DX (GB)
(74) Representative: Spence, Anne
(86) International application number: GB9401009
(87) International publication number: WO9429752

(56) References cited:
- WO-A-91/06854
- DE-A- 3 716 846
- DE-C- 4 235 963

## Description

### FIELD AND BACKGROUND OF THE INVENTION

This invention relates to a method and apparatus for measuring and recording geophysical or geochemical parameters of the geographical surface or near surface. Within the near surface layers of the earth the interaction of the interfaces of the various grains of sand, soil or the like or interfaces of various rock types combined with any residual water or other liquids or materials creates a resistance and/or potential across these various material surfaces.

An object of this invention is to derive useful information from measuring such geophysical data at an array of points on or in the ground.

Electrochemical or self potential that exists between different points in the near surface is a well known geophysical parameter and apparatus for measuring it is known; equally apparatus for measuring the resistance or resistivity of the ground is well known. However, the same apparatus for measuring natural or self potential is not normally also used for measuring resistivity and the data provided by making such combined measurements is not conventionally regarded as data which can be particularly usefully combined and applied. In particular such data is usually measured at different locations at successive times and is subject to natural variations of the data with time, temperature, weather, and man-made environmental noise.

Apparatus for measuring the resistivity of the ground is known for example from GB-A-2180070, EP0426563 and EP-A-0110750. However these apparatuses are basically concerned with measuring resistivity at considerable depths in bore holes. The currents and voltages injected are alternating and of the order of tens of volts or they would not penetrate to sufficient depths and the voltage measuring sensors are not sensitive enough to measure the natural ground potential in the surface and near surface (down to tens of metres). The natural potentials are normally of the order of nanovolts to hundreds of millivolts. GB-A-2253912 and WO-A-90/05923 disclose a horizontally arranged set of electrodes in contact with the surface or near surface but they pass a consistent alternating current between a first two electrodes while the potential is measured between a second two electrodes. Sequential measurements are taken between different pairs of second electrodes using the same current between the first electrode and a map of figures derived from these measured potentials (basically representing resistivity) may be drawn.

EP-A-0595028, published after the priority date of this application, discloses taking measurements substantially simultaneously with common sensors but does not repeat the measurements using different base references.

### SUMMARY OF THE INVENTION

The method invented is a combined geophysical measurement in a horizontal linear or areal mode on the surface or in a vertical mode in the near subsurface to evaluate the geoelectrical effect (resistivity) of different geological and geochemical bodies together with their electrochemical bodies together with their electrochemical response to the passive DC-field of the upper earth crust.

The computerised registration of different electrical properties with the same field equipment without moving sensors, in regular or irregular, horizontal or vertical arrays allows after intensive data processing and correlation a combined data set (anomaly display) of all surface and subsurface geological and geochemical events.

The active measurement (surface resistence) allows differentiation of geological surface bodies even under very complex situations and produces all values necessary for a true correction of the measured data set with the electrochemical response of geological and artificial bodies summed up with the surface influences. Only this combined measurement with the same sensors (geographical position) allows, through correlation and correction, the separation of surface and subsurface information.

Accordingly, in one aspect, the present invention provides a method of collecting and recording geophysical data which comprises recording substantially simultaneously a plurality of first type measurements of the ground potential using sensors at an array of selected positions in a target area, each measurement being relative to a common base reference, recording substantially simultaneously a plurality of second type measurements of electrochemical ground potential using the same sensors in the same array and with the same base reference, the first type measurements being made substantially coincidentally with introducing a known current pulse into the ground, repeating a plurality of times the measurements of the first type and of the second type using substantially the same sensors but using a series of different base references in succession, and correlating the recorded measurements to produce one or more displays of the variation of electrochemical potential and/or resistance of the ground over the target area. The first type measurements are preferably used to calculate resistance or resistivity of the ground. It is immaterial whether the first type measurements are made before or after the second type measurements.

In the preferred form of the invention the non polarised measuring sensors at the positions are arranged in a two dimensional array or grid over a surface area of the ground and the display will include a pair of contour maps, one of resistance and one of electrochemical potential over the substantially horizontal target area.

Interpretation of the two data sets results in a new geophysical 2-D display, giving an altered aspect of the near surface.

We have found that from such displays useful information on the make-up of the sub-surface can be deduced, enabling contaminants such as oil or chemicals to be located beneath the surface without the need for exploratory drilling.

The sensors or one or more base point reference sensors may be located linearly at selected spaced positions in a bore hole or surface hollow and the displays will then include graphic profiles of the resistance of the ground and/or electrochemical potential as it varies in substantially vertical planes through the near surface ground less than 10 metres) in the target area.

The resistance is calculated from a simple V=IR equation, since the voltage V is measured by the sensors and the current value I is known. The calculations can include adjustments for the electrochemical potential and the different distances of the sensors from the base reference. The base reference sensors may be outside the target area or may comprise some or each of the sensors in the target area allocated, in turn, to serve as a base reference measurer.

With advantage the sensors are divided into groups, each group associated with an individual data recording and transmission unit. Initially the potential of each sensor relative to others of the sensors in its group may be measured and the results are surveyed to ensure that each sensor is properly connected both to the control system and to the adjacent ground surface.

The finer the spacing of the sensors in the grid or array, the higher the quality of the data and the more precise the contour or profile mapped displays will be. The array spacings are therefore determined by the required quality of the final data display. For example the sensors may be spaced from 0.55 meters to 20 meters apart over the target area or over the perimeter of the target area. There may be from 20 to 4000 sensors in an array.

Taking the measurements at different times at different parts of the target area would produce inaccurate results, because the induced fields vary substantially with time, dependent for example on lunar effects, weather effects, background electrical noise effects and other natural and environmental changing conditions. By taking the recordings substantially simultaneously at all sensors some of the errors produced by these effects are eliminated. By taking a series of recordings using different base references and reviewing the results, other transient anomalies can be observed by a skilled user of the data, and the data including these anomalies rejected. Corrections can be introduced for the natural variation of the data in different magnetic directions.

Another use of the invention is to locate any breach of or leakage through vertical or horizontal subsurface sealing walls intended to prevent or reduce the flow of water therethrough. Such walls may be single walls, multiple parallel walls or a matrix of walls defining a series of chambers. Walls are commonly built around areas where waste is stored to prevent contaminated water leakage. As the walls are built by injecting concrete into the ground they are of uneven thickness and holes may result. Locating the position of such a hole without digging can be extremely useful.

A series of sensors are located in a pattern at various points along the wall or walls either on one side of a wall or in a pattern straddling the wall or walls. Data is recorded from the sensors as before, with the base reference sensor either on the surface or lowered into a convenient bore hole or well. Profile maps of the resistivity will tend to show a reduced resistivity in the area of a wall hole.

The leak flow pattern may be artificially varied or enhanced by pumping water to or from one side of a wall or an area between or outside the walls and taking recordings before and after the variation. A tracer material such as animal salt may be introduced into the ground water.

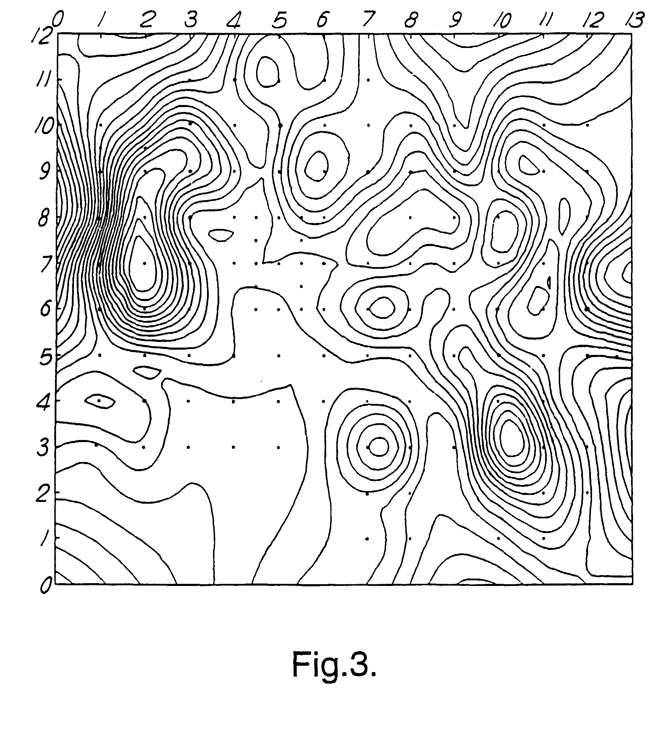

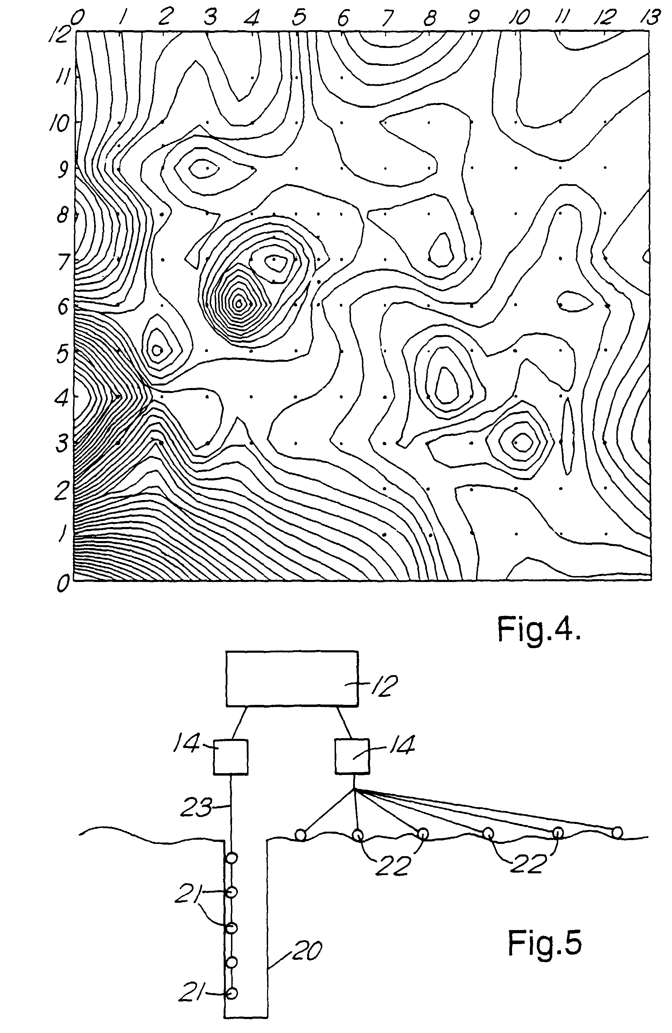

In another aspect the invention provides apparatus for measuring and recording ground resistance and electrochemical potential between a reference position and a plurality of measuring positions in an array in a target area, comprising microprocessor means, connected by cable means to a plurality of measuring sensors, each sensor being capable of measuring the natural electrochemical potential of the ground at a position in the array at which it is located relative to a reference potential sensor at a base reference point, the processor means being programmed to control and make a first set of recordings of substantially simultaneous measurements (representing natural potential of the ground) from all the sensors, the processor means being programmed to identify the information from each individual sensor and relate this to the position of the sensor in the array, direct voltage supply means for introducing into the ground at the base reference point a known current pulse, the processor means being programmed to control and make a second set of recordings of the measured potentials at the sensors (representing ground resistance) substantially coincidentally with the introduction of the current, the processor means being programmed to repeat the first and second sets of recordings a plurality of times using different base reference points and means arranged to use the data from said measurements to produce contour and/or graphic profile displays (Figures 3 and 4) of the variation of the ground resistance and/or electrochemical potential over the target area.

With advantage the apparatus includes a plurality of data transmission and recording units, each connected by cable to a central data receiving and processing means, and to each of which units a group of the sensors is connected. These units make the simultaneous recordings from their associated group of sensors and transmit their semi processed data, in turn, to the central data processing means, where it is correlated to produce the required data from which the displays/maps are made.

### BRIEF DESCRIPTION OF THE DRAWINGS

Embodiments of method and apparatus for measuring geophysical data will now be described, by way of example only, with reference to the accompanying drawings of which:-
Figure 1 is a schematic block diagram illustrating apparatus to be used for measuring,
Figure 2 is a diagrammatic graph illustrating changes in potential with time,
Figure 3 is a contour map showing resistance plotted over the a target area,
Figure 4 is a contour map showing electrochemical potential plotted over the same target area,
Figure 5 is a diagrammatic illustration of another arrangement of the apparatus,
Figure 6 shows a diagrammatic section through two parallel walls with adjacent sensors,
Figure 7 shows a plan view of a single wall and a plurality of sensors,
Figure 8 shows a plan view of a matrix of walls and a plurality of sensors,
Figures 9 and 10 are contour maps of ground potential adjacent a wall, and
Figure 11 is a diagrammatic profile map of resistivity measured by different sensors spaced along the ground adjacent a wall.

### DETAILED DESCRIPTION OF EMBODIMENTS OF THE INVENTION

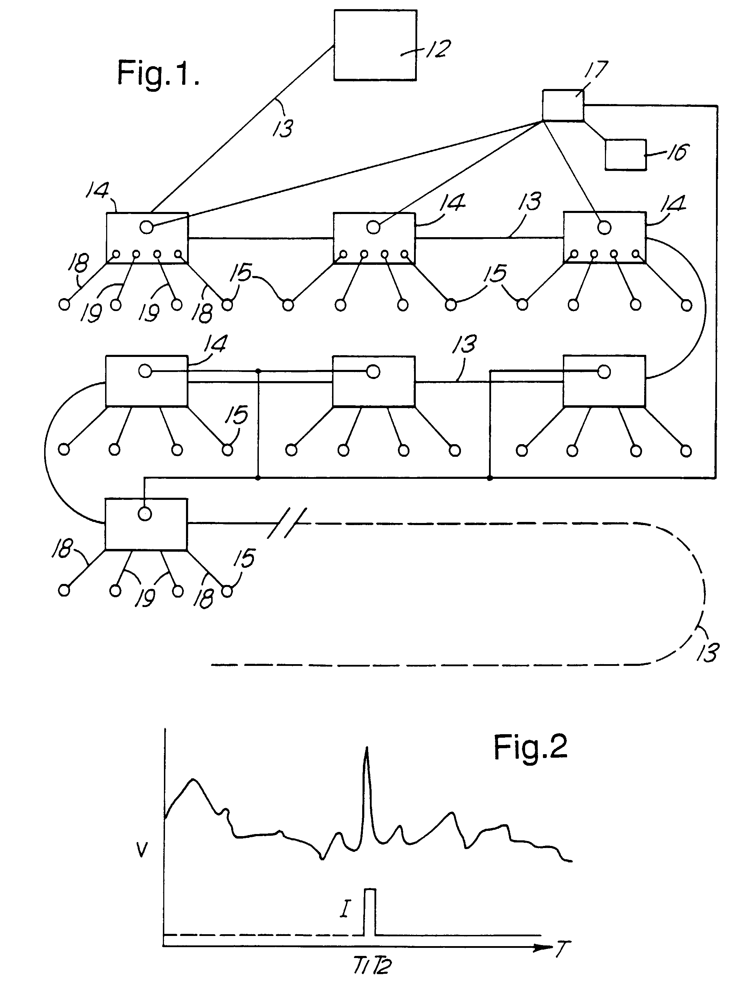

Referring to Figure 1, the apparatus comprises a central control, receiving and processing microprocessor 12 connected by cable 13 to a series of data recording and transmission units 14 arranged in series. Each unit 14 has connected thereto four sensors 15, of known form, capable of measuring the ground potential at a location in which it is placed in contact with, or inserted into, the ground. The sensors are arranged to measure voltages in the range nanovolts (10⁻⁶volts) to 1 volt, although the voltages measured will normally be tens of millivolts. One or more base point or reference sensors, two of which are shown at 16 and 17, are connected to the units 14. In use each unit receives a continuous signal from one selected reference sensor and each of the sensors 15 connected thereto. Although the diagram illustrates the base point sensors as individually connected to the units 14, they will, in practice, be connected through the cable 13. Each unit is programmed, on receipt of a command signal from the central processor 12, to make substantially simultaneously a recording of the potential values measured by each of its associated sensors 15 relative to the base point. The command signal is issued to each unit simultaneously

The control processor will be programmed to instruct recordings to be taken, in turn, relative to different ones of the remote reference sensors 16, 17. Alternatively or in addition the control processor may be arranged to allocate one or more of the sensors 15 to serve as a reference sensor and may instruct recordings to be taken relative to some or each of the sensors 15, in turn, acting as a reference sensor(s).

In use, the cable 13 is spread over the surface of a target area to be analysed in a two dimensional configuration, for example an undulating or zig-zag configuration. The sensors 15 attached to each unit 13 are spaced out, preferably so that the sensors are arranged in a well ordered grid or array with equal spacings from one another. For example each sensor may be located at a 10 metre spacing from each adjacent sensor. The cables 18 connecting two of the sensors associated with one unit 14 may be longer than the cables 19 connecting the other two sensors in that group, for example the cables may be respectively 6 metres and 16 metres, with the units 14 spaced apart 30 to 35 metres. Whatever spacing is chosen, the sensors will be marked so that they are always arranged in a predetermined order in the array and the central processor will be supplied with information concerning the spacing and location so that the processor can identify the information from a particular sensor with a particular location on the ground.

By taking readings relative to a plurality of spaced base reference points over the array of sensors, a set of data can be built up relative to the whole area of the array.

The apparatus includes means for introducing a direct current pulse of known microamp value, for example 50 microamps, into the ground via one or more base reference sensors. This will be introduced from a direct voltage source normally of 0-10V, for example about 600mV. The control unit is programmed to instruct simultaneous measurements to be recorded, as before, immediately after or coincident with the introduction of this current. This will record a voltage higher than that of the electrochemical potential. This allows a calculation of the resistance to be made using the simple V=IR relationship with adjustments. As shown diagrammatically in Figure 2, the self potential V as measured relative to a reference potential at any sensor, varies with the time T. If a current pulse, as shown at I, is introduced into the ground and a measure of potential is taken substantially coincidentally therewith, the change in potential as a result of the current can be measured. For example if measures of potential are taken at times T1 and T2 the difference between these measures will be the result of the introduction of the known current value and the resistance value of the ground between the sensor and base point can be calculated.

The data from the individual sensors passes through a filter to eliminate as many of the unwanted signals as possible. The data is temporarily stored and any offset data determined and removed in the units 14 and is transformed from analogue form into a digital value within the units 14. The digital data is analysed and a value of the resistance of the ground adjacent each individual sensor with respect to a distant sensor or pre-allocated sensor is determined. This data value is combined with a status and command string within the data transmission units 14 before being sent back to the controlling central processor for display and storage. The data transmission units 14 are controlled by the central control unit 12.

The data received by the central processor is stored in a magnetic media and can be simultaneously displayed either in graphical form or numerical form for the operator's quality control and amendment. The data received by the central computer is later processed using standard off-the-shelf type software. Processing procedures can include quality control to ascertain if unwanted data has been included into the data set. Once this has been completed the data is further processed to produce contour, or other maps of the measured area. Figures 3 and 4 show sample contour maps showing respectively the resistance and electrochemical potential of the near surface over an area covered by the sensors and with the contours extrapolated slightly beyond the array of sensors. The dots on the contour map mark the position of the sensors.

From these maps, a skilled interpreter can locate areas which show various anomalies and which can be drilled for following cleaning programmes if necessary.

A further embodiment of the invention is seen in Figure 5. A bore hole 20 is formed in the ground in the target area and a first set of sensors 21 connected by cable 23 are located in the bore hole in a linear array and pressed into engagement with the ground forming the wall of the bore. With a minimum of one a second set of sensors 22 are arranged in a two dimensional or linear array engaged with the ground on its surface. A series of simultaneous measurements of resitance and/or electrochemical potential are then made as before using one set of the sensors as the array and one of the sensors of the other set as a base reference. A series of such readings may be taken with different ones of the sensors as the base reference sensor. The data sets from these figures may be used to produce contour maps or graphic profile maps in a number of different vertical planes through the near surface of the ground or 3D data blocks of information. This allows the user to target changes on the variations in the near surface from the down hole sensors up to the surface sensors.

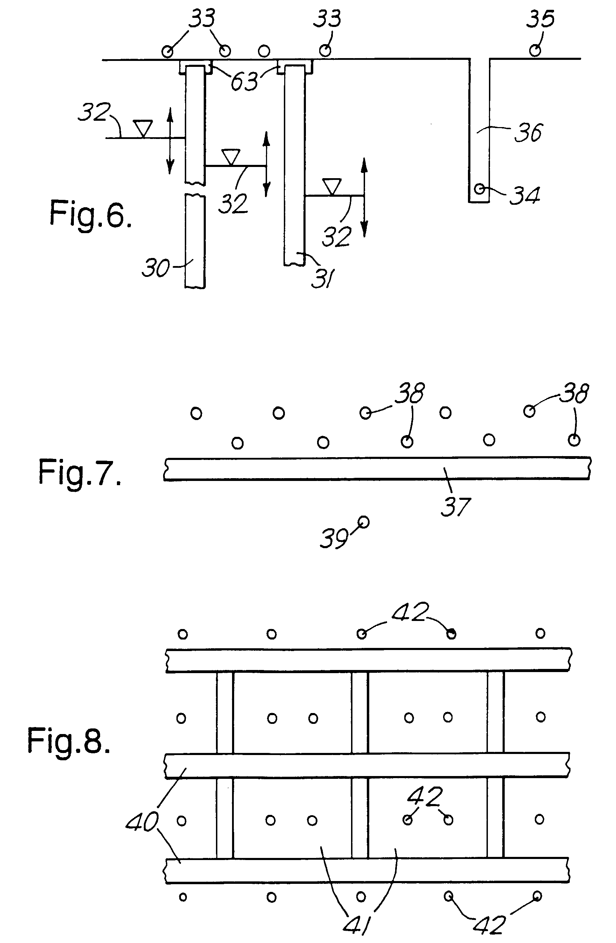

Figure 6 shows a pair of vertical, parallel, under surface sealing walls 30, 31 with the ground water level 32 different on each side of each wall. A plurality of sensors 33, connected to each other and a processor (not shown) as before, is located in an array on the surface adjacent the walls. The array can be on one side or both sides of the or each wall (there may be a single wall) in any suitable pattern. One or more base reference sensors 34, 35 on the surface or in a bore 36 is also provided as before, and simultaneous measurements are recorded and processed as before described. The data can be usefully used to locate the position(s) of leakage through the wall or walls.

Figure 7 shows a single wall 37 with sensors 38 arranged in one form of staggered array and a base sensor 39, all connected to a processor (not shown).

Figure 8 shows a matrix of walls 40 defining chambers 41 and an array of sensors 42 connected to a processor (not shown), with a base sensor or means for using some of the sensors 42, in turn, as a base sensor.
(a) Measurements are made in what can be regarded as the passive mode when water is flowing through the wall, if there is a leakage, under natural means and the ground water table is stable i.e. normal flow to the lowest level in the surrounding area such as a stream or river.
(b) Measurements are made when an artificial ground water table is created by pumping away some of the water on either side of the wall creating an artificial flow through or under the wall thereby increasing the flow potential in the subsurface which is recorded.
(c) When the situation is parallel walls, measurements are made when an artificial ground water table is created by pumping away some of the water on either side of the wall or 4 from between the walls creating an artificial flow through or under the wall thereby increasing the flow potential in the subsurface which is recorded.
(d) If a matrix of walls are encountered then the water must be pumped out of or into the chambers that are suspect creating the unnatural flow.
(e) All of the above methods rely upon the natural ground water to generate the flow potential but, an alternative method is to use a tracer material, e.g. salt where permissable, to highlight the changes in the subsurface by either altering the conductivity of the ground water or the addition of a subsurface material differing in makeup to the surrounding medium. This tracer material can either be allowed to distribute itself into the subsurface or ground water or can be influenced by pumping as in sections (a) to (d).

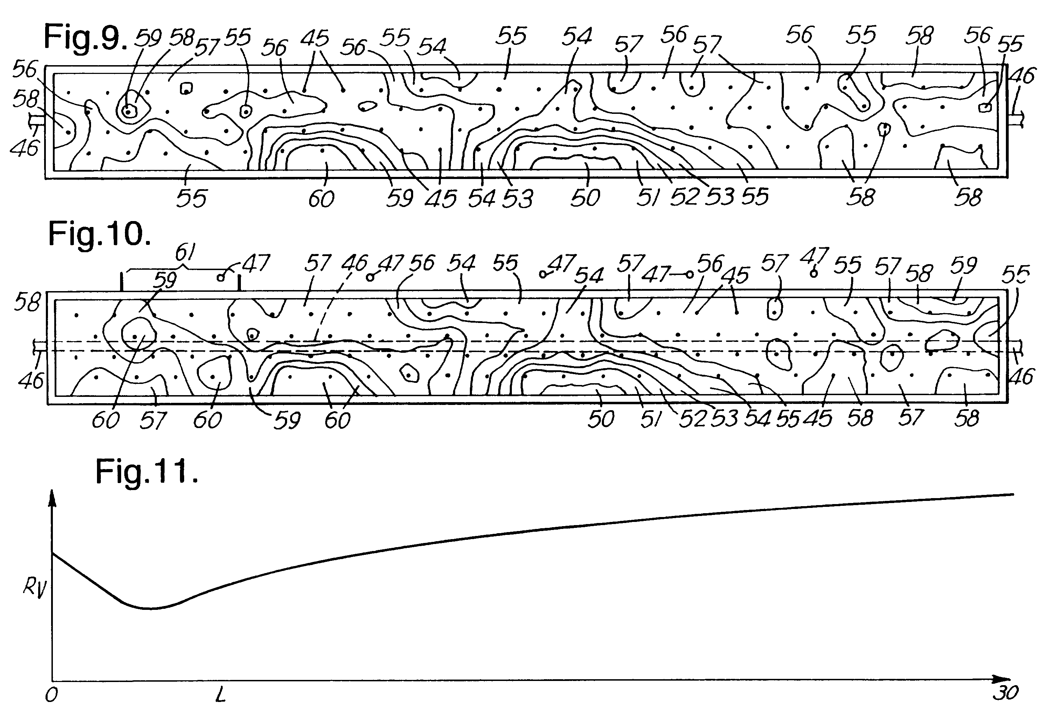

Figure 9 shows one example of a contour map (normally produced in colour) of ground potential measured by an array of sensors 45 spaced two metres apart from one another and located in an array on the ground surface on opposite sides of an undersurface wall indicated diagrammatically at 46. In this example the wall extends through the middle of the map which extends for a fifty metre length of wall. Measurements of ground potential were taken simultaneously by the sensors 45, with five successive simultaneous measurements being taken using five different base reference sensors located in bores in the ground at positions indicated by the references 47. The resulting contour map is an amalgam of the five different sets of measurements with the different areas of the map indicated as 50 to 60 inclusive representing the following voltage measurements:
50 minus 16 to minus 10 millivolts
51minus 10 to minus 4 millivolts
52 minus 4 to 2 millivolts
53 2 to 8 millivolts
54 8 to 14 millivolts
55 14 to 20 millivolts
56 20 to 26 millivolts
5726 to 32 millivolts
58 32 to 38 millivolts
59 38 to 44 millivolts
60 44 to 50 millivolts

Figure 10 shows a similar contour map taken from similar readings but after a trace material (such as salt) was injected into the ground. The change in ground potential in the area indicated as 61 indicates a leak in the wall in this area.

Figure 11 shows very diagrammatically a profile plot of apparent resistivity RV as measured by a plurality of sensors spaced along the length L of a wall, the measurements being taken substantially simultaneously with the injection of a current into the ground at the base sensor. The graph is arrived at by cumulating figures from a plurality of readings using differently positioned base sensors on the other side of the wall. Corrections will be made for ground potential and for the length of the travel of the signal to the sensors in the calculations of the resistivity. The dip in the graph indicating a reduction in apparent resistivity indicates that a leak is present in this position of the wall. Where a subsurface wall does not extend up to the ground level, the ground above the wall will be excavated as indicated at 63 in Figure 6 so that current will not pass through the ground above the wall but will tend to find the easiest path through the wall indicating the existence of a hole in that wall.

## Claims

1. A method of collecting and recording geophysical data which comprises recording substantially simultaneously a plurality of first type measurements of the ground potential using sensors at an array of selected positions in a target area, each measurement being relative to a common base reference, recording substantially simultaneously a plurality of second type measurements of electrochemical ground potential using the same sensors in the same array and with the same base reference, the first type measurements being made substantially coincidentally with introducing a known current pulse into the ground, repeating a plurality of times the measurements of the first type and of the second type using substantially the same sensors but using a series of different base references in succession, and correlating the recorded measurements to produce one or more displays of the variation of electrochemical potential and/or resistance of the ground over the target area.

2. A method according to claim 1 characterised in that the sensors are a plurality of non polarised measuring sensors arranged in a substantially two-dimensional array over the surface of the target area.

3. A method according to claim 1 in which the sensors are located in an array in a bore hole in the ground in the target area.

4. A method according to claim 1 or claim 2 in which a common base reference is located in a bore hole in the ground.

5. A method according to claim 1 in which the current pulse from a direct current source is introduced into the ground via a base reference sensor probe, or one of said sensors in the target area selected to act as a base reference probe for that measurement.

6. A method according to claim 1 in which some or each of the sensors located at the selected positions in the target area are used in turn to serve as a base reference.

7. A method according to claim 1 or claim 2 in which at least a base reference is outside the target area.

8. A method according to claim 1 in which the sensors at the selected positions are divided into groups, each group being associated with an individual data recording and transmission unit.

9. A method according to claim 8 in which initially the potential of each sensor relative to others of the sensors in its group is measured and the results are surveyed to ensure that each sensor is properly connected both to a control system and to the adjacent ground surface.

10. A method according to claim 1 which includes calculating the resistance or resistivity of the ground from the first type measurements corrected for the measured electrochemical potential at the positions.

11. A method according to claim 10 which includes correcting said calculations of resistivity for the natural variation of the data in different magnetic directions.

12. A method according to claim 1 in which the target area is adjacent a wall, a series of walls or a matrix of walls intended to seal against the flow of water therethrough and the measurements are used to locate the position of leakage through one or more of the walls.

13. A method according to claim 12 which includes artificially introducing a variation in or enhancement of the leak flow pattern through said wall or walls by pumping water to or away from one side of the wall or one area between or outside the walls and taking the recordings before and after the artificial variation.

14. A method according to claim 12 or claim 13 which includes introducing a tracer material into the ground water to highlight the changes in the subsoil.

15. A method according to claim 1 or claim 2 which includes preparing from the recorded data a pair of contour maps, one of resistance and one of electrochemical potential over the substantially horizontal target area.

16. Apparatus for measuring and recording ground resistance and electrochemical potential between a reference position and a plurality of measuring positions in an array in a target area, comprising microprocessor means (12), connected by cable means to a plurality of measuring sensors (15), each sensor being capable of measuring the natural electrochemical potential of the ground at a position in the array at which it is located relative to a reference potential sensor (16, 17) at a base reference point, the processor means being programmed to control and make a first set of recordings of substantially simultaneous measurements (representing natural potential of the ground) from all the sensors, the processor means being programmed to identify the information from each individual sensor and relate this to the position of the sensor in the array, direct voltage supply means for introducing into the ground at the base reference point a known current pulse, the processor means being programmed to control and make a second set of recordings of the measured potentials at the sensors (representing ground resistance) substantially coincidentally with the introduction of the current, the processor means being programmed to repeat the first and second sets of recordings a plurality of times using different base reference points, and means arranged to use the data from said measurements to produce contour and/or graphic profile displays (Figures 3 and 4) of the variation of the ground resistance and/or electrochemical potential over the target area.

17. Apparatus according to claim 16 characterised in that the processor means is arranged to calculate data concerning the ground resistance from the potential measurements taken by the sensors on injection of the current pulse, and is arranged to compensate for the measured electrochemical potential of the ground in said calculations.

18. Apparatus according to claim 16 in which the sensors are arranged in groups, each group being associated with an individual data recording and transmission unit (14), and in which each data transmission and recording unit is connected by the cable (13) to the central data receiving and processor means, and in which the connections are such that for any measurement the processor can designate a selected measuring sensor to act as the base reference sensor.

## Patentansprüche

1. Verfahren zur Erfassung und Aufnahme geophysikalischer Daten, welches die im wesentlichen simultane Aufnahme einer größeren Anzahl an Type-1-Messungen des Erdpotentials unter Verwendung von in ausgewählten Positionen im Untersuchungsgebiet angeordneten Sensoren beinhaltet, bei welchem jede Messung relativ zu einer Basisreferenz durchgeführt wird und bei welchem im wesentlichen gleichzeitig eine größere Anzahl an Type-2-Messungen des elektrochemischen Erdpotentiales unter Verwendung derselben Sensoren in derselben Anordung und mit derselben Basisreferenz aufnimmt, wobei die Type-1-Messung im wesentlichen gleichzeitig mit dem Einbringen eines bekannten Stromimpulses in das Erdreich durchgeführt wird, unter Wiederholung einer größeren Anzahl von Messungen der Type-1 und der Type-2 unter Verwendung derselben Sensoren, aber unterschiedlichen Basisreferenzen in Abfolge, unter Korrelation der aufgezeichneten Messungen, um ein oder mehr Ergebnisdarstellungen der Veränderungen des elektrochemischen Potentials und/oder Widerstandes im Untergrund des Untersuchungsgebietes zu erzeugen.

2. Verfahren nach Anspruch 1), dadurch gekennzeichnet, daß die Sensoren eine Vielzahl von nicht polarisierten Meßsonden darstellen, ausgelegt in einer vorwiegend 2-dimensionalen Anordnung auf der Oberfläche des Untersuchungungsgebietes.

3. Verfahren nach Anspruch 1), dadurch gekennzeichnet, daß die Sensoren in einer Anordnung in einem Bohrloch im Untergrund des Untersuchungsgebietes plaziert sind.

4. Verfahren nach Anspruch 1) oder 2), dadurch gekennzeichnet, daß eine gemeinsame Basisreferenz in einem Bohrloch im Untergrund angeordnet ist.

5. Verfahren nach Anspruch 1), dadurch gekennzeichnet, daß der Stromimpuls von einer direkten Stromquelle über den Basisreferenzsensor in den Untergrund eingeführt wird oder eine der angeführten Sensoren im Untersuchungsgebiet ausgewählt wird, um als Basisreferenzsonde für diese Messung zu dienen.

6. Verfahren nach Anspruch 1), dadurch gekennzeichnet, daß einige oder jeder der an den ausgewählten Positionen angeordneten Sensoren im Untersuchungsgebiet abwechselnd als Basisreferenz verwendet werden können.

7. Verfahren nach Anspruch 1) oder 2), dadurch gekennzeichnet, daß zumindest eine Basisreferenz außerhalb des Untersuchungsgebietes angeordnet ist.

8. Verfahren nach Anspruch 1), dadurch gekennzeichnet, daß die Sensoren an den ausgewählten Positionen in Gruppen gegliedert werden, und jede Gruppe mit einer individuellen Datenaufnahme- und Datenweitergabeeinheit verbunden ist.

9. Verfahren nach Anspruch 8), dadurch gekennzeichnet, daß anfänglich das Potential jedes Sensors relativ zu den anderen Sensoren seiner Gruppe gemessen wird, wobei die Ergebnisse dahingehend untersucht werden, um sicherzustellen, daß jeder Sensor sowohl richtig mit der Kontrolleinheit als auch mit der darunter liegenden Erdoberfläche verbunden ist.

10. Verfahren nach Anspruch 1), dadurch gekennzeichnet, daß die Berechnung des Widerstandes oder des Erdwiderstandes von Typ-1-Messungen, welche um das gemessene elektrochemische Potential an diesen Sensorpositionen korrigiert wird.

11. Verfahren nach Anspruch 10), dadurch gekennzeichnet, daß die Korrektur der beschriebenen Berechnungen des Widerstandes um die natürlichen Datenabweichungen in verschiedenen magnetischen Richtungen inkludiert.

12. Verfahren nach Anspruch 1), dadurch gekennzeichnet, daß das Untersuchungsgebiet an eine Wand, eine Serie von Wänden oder einer Matrix an Wänden anschließt, welche gegen den Durchfluß von Wasser abdichten sollen und wobei die Messungen dazu verwendet werden, um die Positionen von Fehlstellen (Leckagen) durch eine oder mehrere Wände zu lokalisieren.

13. Verfahren nach Anspruch 12), dadurch gekennzeichnet, daß es eine künstliche Einführung einer Veränderung bzw. einer Verstärkung des Durchströmungsmusters durch besagte Wand oder Wände durch Pumpen von Wasser zu einer Wandseite oder von einer Wandseite weg oder in einem Gebiet zwischen oder außerhalb von Wänden beinhaltet, wobei die Messungen vor, während und nach den künstlichen Veränderungen durchgeführt werden.

14. Verfahren nach Anspruch 12) und 13), dadurch gekennzeichnet, daß das Einführen von Tracermaterial in das Grundwasser beinhaltet ist, um die Veränderungen im Untergrund zu verstärken.

15. Verfahren nach Anspruch 1) oder 2), dadurch gekennzeichnet, daß zwei Konturbilder, ein Widerstandsbild und ein Bild des elekrochemischen Potentiales über das überwiegend horizontale Untersuchungsgebiet aus den aufgenommenen Daten beinhaltet.

16. Anlage zur Messung und Aufnahme des Erdwiderstandes und des elektrochemischen Potentiales zwischen einer Referenzposition und einer Vielzahl von Meßpositionen in einer Anordnung im Untersuchungsgebiet unter Zusammenwirkung von Mikroprozessoren (12) und verbunden durch Leitungen zu einer Vielzahl von Meßsensoren (15), wobei jeder Sensor das natürliche elektochemische Potential des Untergrundes an der Position in der Anordnung messen kann, an welcher er relativ zu einem Referenzpotentialsensor an einem Basisreferenzpunkt plaziert ist (16, 17), die Mikroprozessorsteuerung zu Kontrolle und zur ersten Datenaufnahme im wesentlichen gleichzeitiger Messungen (welche das natürliche Potential des Untergrundes repräsentieren) von allen Sensoren programmiert ist, die Mikroprozessorsteuerung zur Identifizierung der Information von jedem einzelnen Sensor und der Zuordnung derselben zu Positionen des Sensors in der Anordnung, eine direkte Stromquelle für die Einführung eines bekannten Stromimpulses an dem Basisreferenzpunkt In den Untergrund, der Mikroprozessor dahingehend programmiert zur Kontrolle und Durchführung einer zweiten Serie von Aufnahmen des gemessenen Potentials an den Sensoren (Wiedergabe des Erdwiderstand) im wesentlichen gleichzeitig mit dem Einführen des Stromes, die Mikroprozessorsteuerung dahingehend programmiert, um das erste und das zweiten Aufnahmeset oftmalig unter Verwendung verschiedener Basisreferenzpunkten zu wiederholen und um aus den Daten von den besagten Messungen Konturkarten und/oder Graphische Profile (Fig. 3 und 4) der Veränderung des Erdwiderstandes und/oder des elektrochemischen Potentiales aus dem Untersuchungsgebiet darzustellen.

17. Anlage nach Anspruch 16, dadurch gekennzeichnet, daß die Mikroprozessorsteuerung insoferne ausgelegt ist, um die Daten des Erdwiderstandes aus den Potentialmessungen, welche von den Sensoren im Zuge der Einbringung des Stromimpulses gemessen werden, zu berechnen, sowie dahingehend ausgelegt ist, um diese Daten um das gemessene elektrochemische Potential des Untergrundes in besagten Berechnungen zu kompensieren.

18. Anlage nach Anspruch 16, dadurch gekennzeichnet, daß die Sensoren in Gruppen angeordnet sind, jede Gruppe mit einer individuellen Datenaufnahme- und Datenübertragungseinheit (14) verbunden ist, und in welcher jede Datenübertragungs- und Datenaufnahmeeinheit durch ein Kabel (13) mit der zentralen Datenübernahmeeinheit und der Mikroprozessorsteuerung verbunden ist, und in welcher die Verbindungen derartig sind, daß der Mikroprozessor für jede Messung einen ausgewählten Meßsensor bestimmen kann als Basisreferenzensor zu agieren.

## Revendications

1. Une méthode pour collecter et enregistrer des données géophysiques, qui comprend un ensemble de mesures du potentiel du sol de premier type, enregistrées en grande partie de façon simultanée, en utilisant des capteurs selon un dispositif implanté sur des positions sélectionnées, dans la zone étudiée, chaque mesure étant reliée à une base commune de référence, en enregistrant en grande partie de façon simultanée un ensemble de mesures de second type du potentiel électrochimique du sol, en utilisant les mêmes capteurs dans le même dispositif et avec la même référence de base, les mesures de premier type étant faites en grande partie de façon aléatoire avec l'introduction dans le sol d'une impulsion électrique connue, en répétant à plusieurs reprises les mesures de premier type et de second type en utilisant en grande partie les mêmes capteurs mais en prenant successivement une série de références de base différentes, et en corrélant les mesures enregistrées pour fournir une ou plusieurs représentations graphiques de la variation du potentiel électrochimique et/ou de la résistance du sol de la zone étudiée.

2. Une méthode suivant la procédure déposée 1, se caractérisant par le fait que les capteurs sont un ensemble de capteurs de mesure non polarisés organisés en grande partie selon un dispositif à deux dimensions sur la zone étudiée.

3. Une méthode suivant la procédure déposée 1, dans laquelle les capteurs organisés suivant un dispositif prédéfini sont mis en place dans un puits dans le sol de la zone étudiée.

4. Une méthode suivant la procédure déposée 1 ou 2, dans laquelle une référence de base commune est mise en place dans un puits dans le sol.

5. Une méthode suivant la procédure déposée 1, dans laquelle l'impulsion électrique provenant d'une source électrique directe est envoyée dans le sol par un capteur sonde, ou un des capteurs mentionnés, sur la zone d'étude sélectionnée, afin d'agir comme une sonde référence de base pour cette mesure.

6. Une méthode suivant la procédure déposée 1, dans laquelle quelques uns ou chacun des capteurs implantés aux positions sélectionnées sur la zone étudiée sont utilisés chacun leur tour pour servir de référence de base.

7. Une méthode suivant la procédure déposée 1 ou 2, dans laquelle au moins une référence de base se trouve en dehors de la zone étudiée.

8. Une méthode suivant la procédure déposée 1, dans laquelle les capteurs aux positions sélectionnées sont divisés en groupes, chaque groupe étant associé à un enregistreur de données individuel et à une unité de transmission de données.

9. Une méthode suivant la procédure déposée 8, dans laquelle initialement le potentiel de chaque capteur par rapport aux autres capteurs dans leur groupe est mesuré et les résultats sont analysés et traités pour s'assurer que chaque capteur est correctement connecté à la fois à un système de contrôle et à la surface du terrain adjacent.

10. Une méthode suivant la procédure déposée 1, qui comprend le calcul de résistance ou de résistivité du terrain à partir des mesures de premier type corrigées en fonction du potentiel électrochimique mesuré aux emplacements définis.

11. Une méthode suivant la procédure déposée 10, qui comprend les corrections de ces calculs de résistivité tenant compte de la variation naturelle des données dans les différentes directions magnétiques.

12. Une méthode suivant la procédure déposée 1, dans laquelle la zone étudiée est adjacente à un mur, une série de murs ou une matrice de murs prévus pour servir de joints d'étanchéité contre les montées d'eau infiltrantes, et les mesures sont utilisées pour situer l'emplacement des fuites à travers un ou plusieurs murs.

13. Une méthode suivant la procédure déposée 12, qui comprend l'introduction artificielle d'une variation ou d'un accroissement du réseau de fuites à travers ce mur ou des autres murs, en pompant l'eau au pied ou *à* distance d'un côté du mur ou d'une zone intermédiaire ou en dehors des murs et en effectuant les enregistrements avant et après la variation artificielle.

14. Une méthode suivant la procédure déposée 12 ou la procédure déposée 13, qui comprend l'introduction d'un matériel traceur dans la partie aqueuse du sol pour mettre en évidence les modifications dans le sous-sol.

15. Une méthode suivant la procédure déposée 1 ou la procédure déposée 2, qui comprend la préparation à partir des données enregistrées d'un ensemble de deux cartes de tracés de courbes, une de résistance et une de potentiel électrochimique sur la majeure partie horizontale de la zone étudiée.

16. Equipement pour mesurer et enregistrer la résistance du sol et le potentiel électrochimique entre une position de référence et plusieurs positions de mesure selon un dispositif donné, sur la zone étudiée, comprenant les fonctions d'un microprocesseur (12) connecté par des câbles à un ensemble de capteurs de mesure (15), chaque capteur étant capable de mesurer le potentiel électrochimique naturel du sol à un emplacement dans le dispositif pour lequel il est localisé par rapport à un capteur potentiel de référence (16, 17), à un point référence de base, les fonctions du processeur étant programmées pour contrôler et réaliser un premier ensemble d'enregistrement des mesures en grande partie simultanées (représentant le potentiel naturel du sol) à partir de tous les capteurs, les fonctions du processeur étant programmées pour identifier l'information en provenance de chaque capteur individuel et pour la relier à l'emplacement du capteur dans le dispositif, équipement comprenant aussi des moyens pour fournir un voltage direct afin d'introduire dans le sol au point référence de base une impulsion électrique connue, les fonctions du processeur étant programmées pour contrôler et faire un second ensemble d'enregistrement des potentiels mesurés aux capteurs (représentant la résistance du sol) en grande partie de façon aléatoire avec l'introduction du courant, les fonctions du processeur étant programmées pour répéter les premier et second ensembles des enregistrements de nombreuses fois en utilisant différents points référence de base et les moyens mis en place pour permettre d'exploiter les données provenant de ces mesures, afin de fournir le tracé des courbes et/ou des représentations graphiques (figures 3 et 4) de la variation de la résistance du sol et/ou du potentiel électrochimique sur la zone étudiée.

17. Equipement suivant la procédure déposée 16, caractérisé par le fait que les fonctions du processeur sont programmées pour calculer les données concernant la résistance du sol à partir des mesures du potentiel prises par les capteurs lors de l'injection de l'impulsion électrique, et ces fonctions du processeur sont conçues pour prendre en compte, compenser et ajuster dans ces calculs le potentiel électrochimique mesuré du sol.

18. Equipement suivant la procédure déposée 16, dans lequel les capteurs sont disposés en groupes, chaque groupe étant associé à un enregistrement de données individuel et à une unité de transmission (14), et dans lequel chaque unité de transmission et d'enregistrement des données est connectée par câble (13) au système central du receveur et du processeur et dans lequel les connections sont telles que pour chaque mesure le processeur peut désigner un capteur de mesures sélectionné pour remplir les fonctions de capteur référence de base.
